(19) Europäisches Patentamt
European Patent Office
Office européen des brevets

(11) **EP 4 179 267 B1**

(12) **EUROPEAN PATENT SPECIFICATION**

(45) Date of publication and mention
of the grant of the patent:
**24.07.2024 Bulletin 2024/30**

(21) Application number: **21752158.2**

(22) Date of filing: **07.07.2021**

(51) International Patent Classification (IPC):
*F25B 25/00* (2006.01)      *F25D 13/04* (2006.01)
*F25D 17/02* (2006.01)

(52) Cooperative Patent Classification (CPC):
**F25B 25/005; F25D 13/04; F25D 17/02;**
F25B 2339/047; F25B 2400/22; F25B 2600/112;
F25B 2700/21161; F25B 2700/21171; Y02B 30/70

(86) International application number:
**PCT/IB2021/056076**

(87) International publication number:
**WO 2022/009106 (13.01.2022 Gazette 2022/02)**

(54) **REFRIGERATION PLANT WITH COOLING CIRCUIT**

KÄLTEANLAGE MIT KÜHLKREISLAUF

INSTALLATION DE RÉFRIGÉRATION AVEC CIRCUIT DE REFROIDISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2020 IT 202000016504**

(43) Date of publication of application:
**17.05.2023 Bulletin 2023/20**

(73) Proprietor: **Carel Industries S.p.A.**
**35020 Brugine (PD) (IT)**

(72) Inventors:
• **NALINI, Luigi**
**35020 Brugine PD (IT)**
• **LAMANNA, Biagio**
**35020 Brugine PD (IT)**
• **RENESTO, Dimitry**
**35020 Brugine PD (IT)**

(74) Representative: **Soranzo, Benedetta et al**
**Società Italiana Brevetti S.p.A.**
**Stradone San Fermo, 21**
**37121 Verona (IT)**

(56) References cited:
**EP-A1- 3 260 800        EP-A2- 1 262 722**
**US-A1- 2010 023 171**

## Description

This invention concerns a refrigeration plant with a cooling circuit.

In particular, this invention relates to controlling the temperature of the fluid of a cooling circuit serving a plurality of refrigeration machines of a refrigeration plant, wherein this circuit is apt to absorb the condensation heat of such refrigeration machines.

It is currently known to this Applicant that supermarkets are the most electricity-consuming entities in the commercial sector.

A supermarket may consume on average more than one million kWh per year. Most of this energy consumption is attributable to the refrigeration of perishable goods that are housed in what are referred to below as peripheral units, i.e. in cold rooms or in display units such as tubs, showcases or displays of various types, which may take up to half the size of the shop.

Conventional refrigeration plants generally use a system known as "multiplexed", whereby the refrigerant fluid is distributed and evaporated in heat exchangers (evaporators) installed in the peripheral units, thus maintaining the desired temperature inside the latter for product preservation.

A centralised compressor rack sucks the vapour from the evaporation of the refrigerant in the various services by means of a compressor unit which raises the pressure and sends it to the condenser where the fluid is returned to a liquid state and finally redistributed again to the peripheral units, repeating the cycle. The compressor unit is installed in a dedicated room, which is usually located in a room in the shop or on the roof of the shop.

The nature of the food available in a supermarket is such that there are at least two levels of storage temperature in the peripheral units: medium temperature "MT" (where products are stored between approximately +1°C and 3°C) for fresh food, and low temperature "LT" (where products are stored between approximately -20°C and -28°C) for frozen or deep-frozen food. Different temperatures may be required for specific cases.

For this reason, the compressor units in supermarkets usually have two compressors racks with very different saturated suction temperatures; in fact on average, the compressor racks serving the MT peripheral units and those serving the LT peripheral units suck in the refrigerant fluid at a saturated temperature of approximately -10°C and from -30°C to -35°C, respectively.

Obviously, this type of plant comprises an often very complex network of pipes for conveying the refrigerant.

While the same condensed liquid from the compressor racks may be distributed to both categories of services, i.e. MT and LT peripheral units, the suction pipes are necessarily different between MT and LT services.

Due to the distance between the compressor/condenser units and the peripheral services and the consequent extension required by the piping, large quantities of refrigerant are required, which may exceed one thousand kilograms.

The length of the path of the piping between the peripheral services and the centralised unit, which comprises the compressor units and condensers, also results in significant pressure losses, which translate into significant decreases in the overall efficiency of the plant.

In addition, this conventional layout - consisting of multiple sections of piping and welded connections - implies a significant risk of leakage which, on a statistical basis, varies on average from 10% to 25% of the total refrigerant charge, on an annual basis.

In this context, the so-called "water loop self-contained system" (WLSC in short) is increasingly now being used to reduce both the annual energy consumption and the total warming impact (TEWI).

This type of plant requires each peripheral unit (or small groups of peripheral units) to be equipped with its own autonomous refrigeration unit, preferably provided with a variable speed compressor (normally with a BLDC brushless motor driven by an inverter), water condenser and expansion valve; this unit, which is connected to the evaporator, makes each unit self-sufficient and independent from the others.

Each of these peripheral units is connected to a closed hydraulic circuit crossed by a liquid (generally water with antifreeze added) and supplied by it so that its condenser is cooled by heat exchange with the liquid itself, which absorbs the condensation heat of the various connected peripheral units and disperses it through a heat sink consisting of an exchanger outside the supermarket premises.

Solutions aimed at optimising energy consumption may involve not dispersing the heat completely to the outside but recovering some of it for other uses, for example to obtain hot water, obviously with complications of the circuit.

The most commonly used heat sink is the type generally known as a dry cooler consisting of a fan-forced convection heat exchanger. EP 3 260 800 A1 discloses a refrigeration circuit and a cooling circuit in which a coolant circulates through the condenser to provide cooling for the refrigerant. The cooling circuit comprises a control valve operatively coupled to a controller which is configured to identify a coolant temperature differential setpoint, monitor a temperature of the coolant provided to the condenser, calculate a coolant temperature differential based on the temperature of the coolant provided to the condenser, and provide a signal to the control valve to modulate a flow of the coolant through the condenser to drive the coolant temperature differential to the coolant temperature differential setpoint.

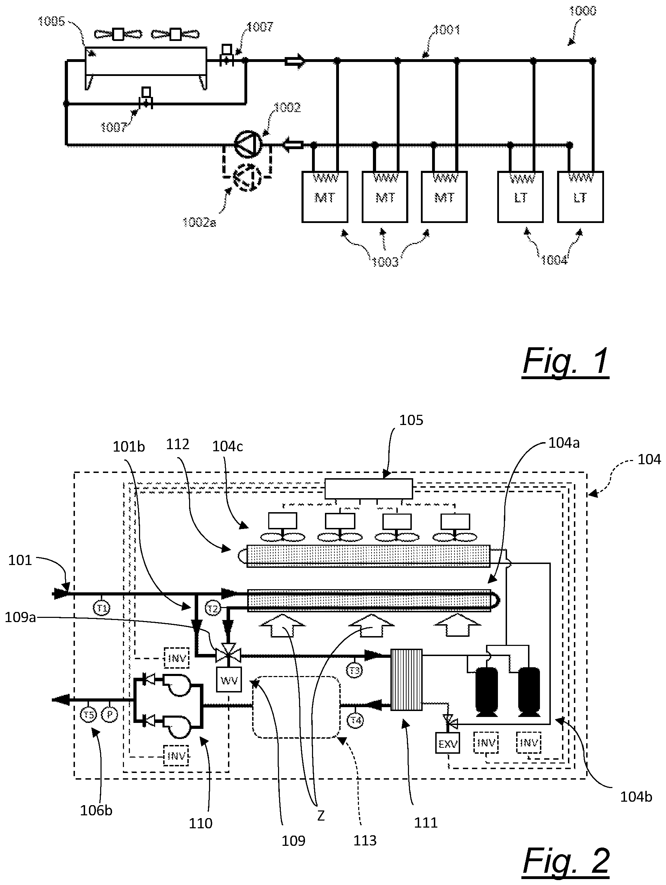

Example diagrams of conventional plants are shown in accompanying Figures 1-4.

In particular, Figure 1 shows the simplified configuration of a conventional WLSC plant, here generally indicated by reference 1000, with a water loop circuit 1001, comprising:

- a pump 1002 which circulates the water; for safety and continuity of service, a second pump 1002a may be installed in parallel to the first one, equipped with shut-off devices to be automatically activated in case of malfunction of the first one, which may be replaced without stopping the plant;
- a plurality of peripheral units, or services, supplied in parallel and comprising both MT peripheral units 1003, i.e. medium temperature units, and LT peripheral units 1004, i.e. low temperature units;
- a dry-cooler 1005, i.e. an external ventilated radiator, with the function of dissipating the condensation heat of the services towards the atmosphere;
- two conjugated motorised valves 1007 or alternatively, a three-way mixer valve (not shown) driven by a thermostatic control with the additional function of by-passing part of the water flow rate in order to prevent the outlet temperature from falling below a set minimum level if the outside atmospheric temperature is too low.

Evidently, the temperature of the water cooled by the dry cooler is closely linked to the outside ambient temperature, where obviously as the latter rises, the temperature of the water supplying the refrigeration units of the peripheral units 1003 and 1004 rises accordingly.

The physical quantities that have the greatest influence on the cooling capacity and efficiency of a compressor are the saturated condensing pressure and the saturated evaporating pressure, which in the case of food storage is not subject to significant variations. The ratio of the saturated condensing pressure to the saturated evaporating pressure constitutes the compression ratio.

It is well known that every 1°C increase in the saturated condensing temperature - which here is due to the increase in the external temperature - causes a decrease in both the cooling capacity and the energy efficiency of the compressor of approximately 2.5%-3%.

In addition, there is a limit value for the compression ratio declared by compressor manufacturers beyond which serious damage may occur.

The problem at the heart of this teaching is to improve the constructive simplicity of conventional plants.

The task of this invention is therefore to solve this problem by making available a refrigeration plant with a cooling circuit that can maintain satisfactory operating efficiency even at high ambient temperatures, while at the same time being suitable for operating in a wide range of cooling capacities depending on the pressure required in relation to the seasonality and the number of peripheral units in operation.

In the context of this task, it is the aim of this invention to propose a refrigeration plant with a cooling circuit that is easy to install and regulate.

This task, as well as these and other purposes which will appear more clearly below, are achieved by a refrigeration plant with a cooling circuit according to the attached independent claim.

Detailed characteristics of a refrigeration plant with a cooling circuit according to this invention are given in the dependent claims. Further features and advantages of the invention will emerge more fully from the description of an embodiment of a refrigeration plant with a cooling circuit, according to this teaching, illustrated by the accompanying drawings tables, in which:

- Figure 1 shows a simplified diagram of known art plants;
- Figure 2 shows a simplified diagram of a detail of a refrigeration plant with a cooling circuit according to this invention, relative to a cooling apparatus;
- Figure 3 shows a refrigeration plant according to this invention, with a variant of the cooling apparatus in Figure 2;
- Figure 4 shows a schematic detail of a variant of the refrigeration plant in Figure 3;
- Figures 5 and 6 show flow diagrams of examples of an optimisation process implemented by a refrigeration plant according to this invention;
- Figure 7 shows diagrams of temperature variation in a refrigeration plant according to this invention, according to possible optimisation process variants of Figures 5 and 6;
- Figures 8, 9 and 10 each show a simplified diagram of a detail of a refrigeration plant with a cooling circuit according to this invention, relative to a cooling apparatus in respective variants of the diagram in Figure 2.

With particular reference to the above-mentioned figures, a refrigeration plant with a cooling circuit 101 is indicated as a whole by 100, and comprises inter alia:

- at least one peripheral unit 102, 103 having a refrigeration machine apt to refrigerate a storage compartment, for example for food products or beverages; this refrigeration machine has a heat exchanger 102a, 103a connected to the cooling circuit 101 for dissipating heat to a secondary fluid flowing therein;
- a cooling apparatus 104 connected to the cooling circuit 101 for cooling the secondary fluid;
- a control device 105 connected to the cooling apparatus 104 and configured to operate the cooling apparatus so as to maintain at least an operating temperature of the secondary fluid within at least a corresponding reference range or to equalize it to at least a corresponding target or set-point value.

In other words, the control device 105 may be configured to operate the cooling apparatus 104 so as to modulate, by operating the latter, said operating temperature of the secondary fluid so as to maintain the latter within said reference range and causing it to pursue said target or set-point value.

The operating temperature according to this teaching may be a value calculated from measured or derived temperatures taken on by the secondary fluid in a plurality of sections of the cooling circuit.

The operating temperature in particular may be measured upstream or downstream of the cooling apparatus.

In a possible embodiment of this teaching particularly suitable for providing a refrigeration plant 100 for a supermarket, there are provided a plurality of peripheral units 102, 103 which are divided into medium temperature units 102 and low temperature units 103.

The medium temperature units 102 may be configured to maintain the respective storage compartment at a temperature indicatively between 0°C and 5°C, whereas the low temperature units 102 may be configured to maintain the respective storage compartment at a temperature indicatively between -20°C and -23°C.

The refrigeration machines of the peripheral units 102 and 103 use a primary fluid as refrigerant fluid.

This primary fluid may be R744, i.e. carbon dioxide, in short $CO_2$.

The secondary fluid may consist of a liquid such as an aqueous mixture.

The use of a mixture of a water and glycol mixture is particularly advantageous. This may be 30% by weight, so that at 15°C it has a density of 1040 kg/m3, a specific heat of 3700 J/(kg x °C) and a freezing point of -15°C.

It can therefore be understood how it is possible in a plant according to this teaching to regulate the operating temperature of the secondary fluid in such a way as to determine specific heat exchange temperatures with the heat exchangers of the peripheral units regardless of the ambient temperature. That is, it is possible to maintain the operating temperature such that the operation of the refrigeration plant 100 can be optimised regardless of the temperature of the environment into which the refrigeration plant 100 dissipates heat.

It can therefore be understood how a refrigeration plant 100 according to this teaching may be operated in such a way as to achieve energy optimisation and allow considerable structural simplicity and greater reliability and durability with respect to conventional refrigeration plants.

In particular, it is possible to optimise the operating conditions of the refrigeration plant 100 with respect to the heat exchange conditions of the secondary fluid with the primary fluid of each peripheral unit 102, 103 so as to determine the most favourable operating conditions of the refrigeration machines.

Moreover, the refrigeration plant 100 according to this teaching allows to optimise its operation also with respect to the heat exchange between the secondary fluid and the environment, as will emerge even more clearly in the following description.

In particular, when the refrigeration machines of the peripheral units 102 and 103 are refrigeration machines using $CO_2$ as a refrigerant fluid, it is possible to arrange the refrigeration plant 100 according to this teaching in such a way that the thermodynamic operating conditions of all the refrigeration machines of the peripheral units correspond to a subcritical operation.

Subcritical operation means operation in which the heat exchange temperature at the heat exchanger is not higher than the critical temperature, i.e. the heat yielded to the heat exchanger consists mainly of latent condensing heat of the refrigerant fluid.

This makes it possible to use structurally simple refrigeration machines for both medium temperature units 102 and low temperature units 103 whereas on the other hand, the refrigeration machines involved must be appropriately structured in conventional plants in which a transcritical operating condition is envisaged for all or some of the refrigeration machines, even if only for a few weeks a year. The use of a refrigeration plant according to this teaching therefore results in a great advantage with respect to conventional plants such as, for example the one illustrated in Figure 1 which instead requires the low temperature units 1004 to be configured to operate in transcritical operation if the temperature of the environment in which the plant is installed may reach such values during the year such as not to allow a heat exchange temperature at the inlet of the heat exchangers of the low temperature units to always be ensured which is substantially never greater than 22°C.

Thus, a refrigeration plant 100 according to this teaching makes it possible to avoid adopting the use of compressors for the refrigeration machines of the low temperature units 103 that are suitable for working under particularly severe compression ratio or structurally complex conditions, as in the case of multi-stage compressors with intermediate cooling possibly by means of a regenerative exchanger.

It also generally avoids the use of a flash gas discharge branch and its valve, as well as the use of a high pressure valve at the condenser discharge, in the refrigeration machines of the peripheral units 102, 103.

In general, the refrigeration plant 100 may comprise at least one temperature sensor 106a, 106b connected to the cooling circuit 101 so as to detect the operating temperature.

Generally speaking, the refrigeration plant 100 may also comprise one temperature sensor alone which may be arranged at the inlet of the cooling apparatus 104 or preferably, two temperature sensors placed one at the inlet of the secondary fluid into the cooling apparatus 104 and one at the outlet thereof, respectively.

The control device 105 may be configured to operate the cooling apparatus 104 according to said temperature of the secondary fluid at the inlet of the cooling apparatus 104 and the temperature of the secondary fluid at the outlet of the cooling apparatus 104, wherein the latter may be said operating temperature for which the control apparatus 105 operates the cooling apparatus 104 to achieve the temperature of the secondary fluid at the outlet of the cooling apparatus 104 within said reference range and/or to pursue a target and/or set-point value.

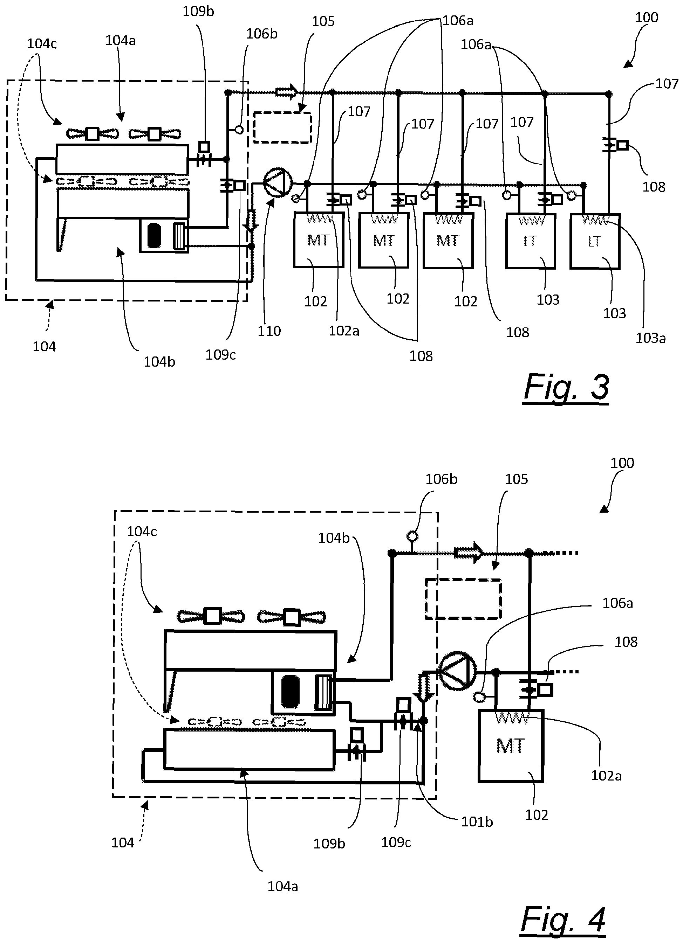

The refrigeration plant 100 will preferably also comprise a temperature sensor for each peripheral unit 102, 103, which is preferably arranged to detect the temperature of the secondary fluid at the outlet of each peripheral unit 102, 103, for example as shown in Figures 3 and 4.

The control device 105 may in general comprise:

- a monitoring device;
- a first local controller connected to the monitoring device and integrated in or connected to the cooling apparatus 104 to operate it based on inputs received from the monitoring device;
- a second local controller for each peripheral unit 102, 103, connected to the monitoring device and integrated in or connected to a corresponding peripheral unit 102, 103 for transmitting operating information about said peripheral unit 102, 103 to the latter, such as information about an operating status of said peripheral unit 102, 103, for example such as a pull-down or defrost status, or an idle status, and/or about operating parameters, such as for example the refrigeration pressure, the temperature of the secondary fluid at the outlet of said peripheral unit 102, 103.

The monitoring device may be configured to set the reference range and/or target value by possibly implementing an optimisation process, for example like one of those described below.

Thus, the control device 105 may in general be connected to the temperature sensor 106a, 106b and configured to operate the cooling apparatus 104 to maintain the operating temperature - which is detected by the temperature sensor 106a, 106b - within the reference range or to equalize it to at least a corresponding target value.

In general, said at least one operating temperature may comprise a first exchange temperature at which the secondary fluid exchanges heat with the primary fluid at the heat exchanger 102a, 103a.

In such a case, as mentioned above, in embodiments of this teaching providing for a refrigeration plant 100 having a plurality of peripheral units 102, 103, each of these may be provided with a temperature sensor 106a, for example placed downstream of the heat exchanger 102a, 103a of the respective peripheral unit 102 or 103, as by way of non-limiting example shown in Figure 3 or in its variant in Figure 4.

The control device 105 may comprise a plurality of controllers (which in themselves are conventional and not illustrated), each integrated in a peripheral unit 102, 103 and configured to operate the refrigeration machine according to a control algorithm, for example configured to perform a feedback control of the machine with respect to an overheating temperature upstream of the compressor with respect to a predefined set point.

The refrigeration plant 100 may also comprise, for each peripheral unit 102, 103, or for each group of peripheral units 102, 103:

- a branch 107 of the cooling circuit 101 connected to the heat exchanger 102a, 103a;
- a local valve unit 108 connected to the branch 107 and operable to regulate a branch flow rate of the secondary fluid flowing in the branch 107 to exchange heat with the heat exchanger 102a, 103a of the peripheral unit 102, 103 or the group of peripheral units 102, 103.

In the example in Figure 3, it is in fact possible to see that the refrigeration plant 100 in the embodiment exemplified therein by way of non-limiting example comprises five peripheral units 102, 103, each connected to the cooling circuit 101 by means of a respective branch 107 provided with a local valve unit 108 and a first 106a of the temperature sensors 106a, 106b which, in this example, is placed downstream of the heat exchanger 102a, 103a of the respective peripheral unit 102, 103.

The refrigeration plant 100 may comprise at least one low temperature unit 103 of the peripheral units 102, 103, which has a refrigeration machine configured to operate at an evaporation temperature which is not greater than -18°C.

Said reference range of the operating temperature of the secondary fluid in this case may have a maximum limit equal to 22°C or said target value cannot be greater than 22°C, in this way the $CO_2$ peripheral units 102 and 103 may be configured to operate always according to a subcritical thermodynamic regime, thus allowing to achieve the above-mentioned advantages of structural simplification.

Said at least one operating temperature may comprise a second exchange temperature consisting of:

- either a temperature at which the secondary fluid exchanges heat with the cooling apparatus 104,
- or a temperature that the secondary fluid takes on directly downstream of the cooling apparatus 104, wherein such temperature may, for example be measured by means of a second 106b of the temperature sensors 106a, 106b.

In particular, a general valve unit 109 and/or a pumping member 110, preferably with adjustable flow rate, each operable to modulate a flow of the secondary fluid interacting with the cooling apparatus 104, may be connected to the cooling circuit 101.

The control device 105 may be connected to the general valve unit 109 and/or to the pumping member 110 in order to operate them so as to regulate the flow rate of secondary fluid exchanging heat with the cooling apparatus 104, for example according to the operating temperature detected downstream of the cooling apparatus 104 as, for example visible in Figure 2, possibly according to an optimisation process as described below.

In particular, the pumping member 110 may comprise a plurality of pumps in parallel, for example two as exemplified in Figure 2, to ensure the functionality of the refrigeration plant 100 in the event of a malfunction or failure of one of the pumps.

The pumping member 110 may comprise, for each pump, a driving device, for example an inverter, to modulate the motor speed of the respective pump to regulate the flow rate of the latter.

The cooling apparatus 104 comprises:

- a radiator member 104a connected to the cooling circuit 101 and crossable by the secondary fluid to dissipate the heat thereof;
- an auxiliary refrigeration machine 104b, which may have variable speed, comprising an evaporator member 111 connected to the cooling circuit 101 for absorbing heat from the secondary fluid, and a condenser member 112 apt to dissipate heat to the environment;
- ventilation means 104c for generating an airflow for cooling the radiator member 104a and the condenser member 112.

The condenser member 112 and the radiator member 104a may be arranged in series so as to be crossed in sequence by an airflow Z generated by the ventilation means 104c, wherein preferably the radiator member 104a is placed upstream with respect to the condenser member 112.

For example, the condenser member 112 may have one face directly attached to the radiator member 104a, wherein the other face may be associated with the ventilation means 104c, which may for example comprise a plurality of fans, for example as exemplified in Figure 2.

The ventilation means 104c may be associated with one alone of the condenser member 112 and the radiator member 104a, or both, so for example they comprise first fans associated with the radiator member 104a and second fans associated with the condenser member 112, indicated by hatched lines in Figures 3 and 4.

In the case where the ventilation means comprise both first fans associated with the radiator member 104a and second fans associated with the condenser member 112, preferably the radiator member 104a and the condenser member 112 are not arranged in series with respect to the cooling airflow passing through them.

In this case, with respect to the configuration in which the condenser member 112 and the radiator member 104a are in series with respect to the ventilation means 104c, the latter may operate an autonomous forced convection cooling effect on the condenser member 112 and the radiator member 104a.

The control device 105 may be configured to actuate the auxiliary refrigeration machine 104b and/or the ventilation means 104c in order to regulate the operating temperature of the secondary fluid, for example the one detected downstream of the cooling apparatus, for example by the second temperature sensor 106b.

In particular, the control device 105 may be configured to operate the auxiliary refrigeration machine 104b, the ventilation means 104c and the general valve unit 109 and/or the pumping member 110 in a coordinated manner so as to control the operating temperature of the secondary fluid.

For example, where the temperature of the environment in which the cooling apparatus 101 dissipates heat is sufficiently low to allow the use of the radiator member 104a alone to maintain the operating temperature at the desired values, the control device may disable the auxiliary cooling apparatus 104b and possibly exclude it from the cooling circuit 101, for example by operating the general valve unit 109 which may, for example comprise a three-way valve 109a, as shown for example in Figure 2, or two motorised valves 109b and 109c as shown in Figure 3 or 4, in order to autonomously intercept two parts of the cooling circuit 101 in fluidic communication with the radiator member 104a and with the auxiliary refrigeration machine 104b, respectively.

Vice versa, if the cooling action of the radiator member 104a alone does not prove to be sufficient, possibly also following the activation of the ventilation means 104c, the control device may operate the auxiliary refrigeration machine 104b to obtain the desired operating temperature, i.e. within said reference range, or to equalise it to or make it pursue a target or set-point value.

In this way, a significant energy improvement is achieved compared to a configuration in which, for example a step chiller was used to yield heat to the water in a radiator, which would then dissipate this heat into the environment by forced convection.

In fact, such a solution with a step chiller would obtain a double thermal gradient which instead is avoided by the cooling apparatus 104 described above when the auxiliary refrigeration machine 104b absorbs heat from the secondary fluid to disperse it into the environment directly through its own condenser member 112 which may be cooled by forced convection by the ventilation means 104c, thus allowing to operate with a lower compression ratio as compared to the aforementioned solution with a step chiller.

The general valve unit 109 may be configured to supply the radiator member 104a alone, the auxiliary refrigeration machine 104b alone, or both, with the secondary fluid, as well as to modulate the possible action of the ventilation means 104c to allow a combined action of the radiator member 104a and the auxiliary refrigeration machine 104b, thus allowing a greater energy optimisation.

In a less functionally flexible alternative, the general valve unit 109 may be configured to supply the radiator member 104a alone or the auxiliary refrigeration machine 104b alone with the secondary fluid without partializing the secondary fluid between them, for example as in the solution visible in Figure 3, where the main valve unit 109 comprises two motorised valves 109b and 109c placed downstream of the radiator member 104a and the auxiliary refrigeration machine 104b, respectively.

The main valve unit 109 may also comprise a bypass branch 101b that runs parallel to the radiator member.

The bypass branch 101b may be connected to one of the paths of the aforementioned three-way valve 109a, the other two paths of which may be in communication with a discharge of the radiator member 104a and the inlet of the auxiliary refrigeration machine 104b, for example as shown in Figure 2.

Or a first motorised valve 109b may be connected between the discharge of the radiator member 104a and the inlet of the auxiliary refrigeration machine 104b, and the second motorised valve 109b may be connected between the bypass branch 101b and the inlet of the auxiliary refrigeration machine 104b in order to mix the secondary fluid from the bypass branch 101b and the secondary fluid from the radiator member 104a.

The control device 105 may be configured to operate the main valve unit 109, and in particular to operate the three-way valve 109a or the motorised valves 109b and 109c, in order to combine the secondary fluid flowing through the bypass branch 101b and/or through the radiator member 104a, to mix them in order to regulate the operating temperature, and/or through the auxiliary refrigeration machine 104b which, as in the example in Figure 2 or 4, may have the evaporator member 111 always crossed by a section of the cooling circuit 101, or a bypass duct of the evaporator member 111 may be provided.

Thus for example, the control device 105 may be configured such that if the ambient temperature is low, it deactivates the auxiliary refrigeration machine 104b and, operating the main valve unit 109, mixes part of the secondary fluid crossing the bypass branch 101b with part of the secondary fluid cooled by the radiator member 104a, possibly deactivating or modulating the action of the ventilation means 104c, to control the operating temperature.

The three-way valve 109a and the motorised valves 109b and 109c are preferably modulating valves in order to be operated so as to regulate the flow of secondary fluid crossing them.

The cooling apparatus may also comprise, connected to the cooling circuit 101, preferably upstream of the pumping unit 110, an inertial tank 113 for containing the thermal cycling and useful in particular for applications in which the cooling apparatus 104, and especially the auxiliary refrigeration machine 104b, employ ON-OFF compressors instead of preferable variable speed compressors, for example compressors with an inverter-driven BLDC motor.

The control device 105 may be configured to define said reference range or said target value for the operating temperature according to an optimisation process which may be configured to maximise a coefficient of performance EERTOT given by the formula:

$$EER_{TOT} = \frac{EER_{SP} * EER_{CH}}{EER_{SP} + EER_{CH} + 1}$$

wherein $EER_{SP}$ consists of the energy efficiency average of each of said one peripheral units 102, 103; $EER_{CH}$ consists of the energy efficiency of the cooling apparatus 104.

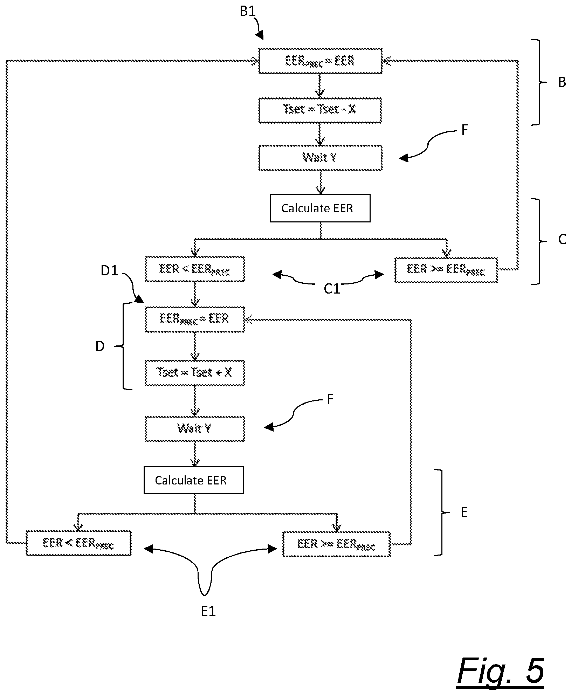

This optimisation process may comprise, in sequence, for example as seen in Figure 5:

- a step A that involves calculating the coefficient of performance EERtot and
- a step B that involves changing the target value Tset of the operating temperature by a first predefined value X, for example positive;
- a step C that involves re-calculating the coefficient of performance EERtot and checking whether the value of the coefficient of performance EERtot has decreased and, if so, carrying out the following step D, or repeating steps B and C;
- a step D that involves changing the target value Tset of the operating temperature by a second predefined value -X, opposite to the first predefined value X;
- a step E that is carried out if step D is carried out and that involves re-calculating the coefficient of performance EERtot, checking whether the value of the coefficient of performance EERtot has decreased as a result of step D and, if so, carrying out step B or repeating step D.

This optimisation process may comprise a standby step F of a predefined time Y which is carried out following step B and/or step D.

In addition, step D and/or step B may provide a sub-step D1 and B1, respectively, for assigning the value of a second parameter EER that is equal to the last value calculated of the coefficient of performance EERtot, to a first parameter EERprec. Steps C and/or E correspondingly may comprise a sub-step C1 and E1, respectively, which provide comparing the value of the first parameter EERprec with the value of the second parameter EER as recalculated.

Several methods may be used to calculate this plant $EER_{SP}$.

A first, simpler and more effective method is to use the sum of the cooling capacities of each peripheral unit 102, 103 at instant (i) divided by the sum of the powers absorbed by the compressor of the refrigeration machine of each peripheral unit 102, 103 at the same instant. As per the formula below.

$$EER_{SP} = \frac{\sum kW\_Cooling_{SPi}}{\sum kW\_Power_{SPi}}$$

In this calculation, it is possible to exclude (or for example to zero) capacities and powers absorbed by the peripheral units 102, 103 which are in particular statuses of the refrigeration cycle (for example in a pull-down phase) or which operate in particularly unstable statuses so as not to destabilise the entire system as a result of unstable statuses of the peripheral units 102, 103.

The unstable status of a peripheral unit 102, 103 may be defined on the basis of parameters of the controller of the peripheral units 102, 103 or by evaluating the cooling capacity of the peripheral unit 102, 103 considered over time, for example by means of the difference between cooling capacity at instant (i) and instant (i-1) and deviation.

A second method of calculating the parameter $EER_{SP}$ may be carried out by considering weighted averages of the coefficients of performance $EER_{SPi}$ of each peripheral unit 102, 103 present in the plant, or by means of data filtration systems according to the statuses of the peripheral units 102, 103.

Such weighted averages or filtration systems may take into account factors such as:

- nominal cooling capacity of the peripheral units 102, 103;
- operating time of the peripheral unit 102, 103 and stability; e.g. considering the variation of the parameter $EER_{SPi}$ from the previous value to understand if the peripheral unit 102, 103 considered is in an unstable step of continuous variation of the coefficient of performance or in a stable step with little variation of the coefficient of performance. This assessment may be made by the refrigeration machine controller of the peripheral unit 102, 103 (in the case where it is the latter that provides the algorithm controller with the value of $EER_{SPi}$ as data) or by a master controller of the refrigeration plant 100;
- status of the peripheral unit 102, 103: particular statuses of the peripheral unit 102, 103 such as OFF, defrost, or pull-down may be assigned with specific weights in the calculation, e.g. 0 in the case of peripheral unit 102, 103 in OFF or defrost so that an OFF peripheral unit 102, 103 is not considered in the optimisation, or a value with decreased weight during pull-down where the peripheral unit 102, 103 consumes more energy than under normal operating conditions, whereby it might not be preferable to optimise the entire plant for only a few units in this status;
- number of peripheral units 102, 103 in one of the previously indicated statuses (specifically pull-down), whereby on the contrary, it may be preferable to take into account simultaneous pull-down statuses in order to favour them if they weigh heavily in the whole plant, for example by weighing the number of peripheral units 102, 103 simultaneously in pull-down with respect to the total number of peripheral units 102, 103 in the refrigeration plant 100.

An example of a weighted average with the cooling capacities of peripheral units 102, 103 is given by the following formula:

$$EER_{SP} = \frac{\sum EER_{SPi} * kW_{SPi}}{\sum kW_{SPi}}$$

where $kW_{SPi}$ is a weight parameter associated with the coefficient of performance $EER_{SPi}$ of the corresponding peripheral unit 102, 103.

This same weighted average may also be used as a filter by applying temporary values to the weights $kW_{SPi}$ for particular machine statuses; e.g. $kW_{SPi} = 0$ temporarily for OFF units or units in defrost, and $kW_{SPi} = K$ where K is a factor other than 1 for units in pull-down status.

Alternatively, the control device 105 may be configured to define said reference range or said target value according to an optimisation process configured to minimize a total energy consumption of the refrigeration plant 100.

For example, the optimisation process may be configured to minimise a total energy consumption Etot of the refrigeration plant (100) where the total energy consumption Etot is given by the formula $E_{TOT} = E_{SP} + E_{CH} + E_{PC} + E_{FAN}$, where:

- $E_{SP}$ consists of the energy consumption of the peripheral units 102, 103,
- $E_{PC}$ consists of the energy consumption of the pumping unit 110,
- $E_{CH}$ consists of the energy consumption of the radiator member 104a and the auxiliary refrigeration machine 104b, and
- $E_{FAN}$ consists of the energy consumption of the ventilation means 104c.

In particular, these parameters may be defined as follows:

- $E_{SP} = f$ (Vcomp, rccomp), where Vcomp is set by the control criteria of the relative peripheral unit 102, 103 and rccomp = f (Twl), where Twl consists of the operating temperature, i.e. $E_{SP} = f$ (Twl);
- $E_{PUMP}$ may be defined as a function of plant characteristics such as the predominance of the pumping unit 110;

- $E_{FAN} = f$ (Twl) in the first instance would be a function of the speed of the fans of the ventilation means 104c, which however modulate their operation as a function of the set-point temperature of the cooling circuit 101, i.e. the operating temperature, therefore it may indirectly be considered a function of this temperature;

- $E_{CH}$ = f (Vcomp, rccomp), where again Vcomp is set by the regulation of the unit to obtain a certain setpoint temperature of the WL, i.e. operating temperature, and rccomp is a function of the evaporation temperature which in turn depends on the desired Twl and the external ambient temperature which is set by external climatic conditions; therefore $E_{CH}$ = f (Twl).

Finally, there will be functional limits imposed for the operating temperature, which are indicated as Twl$_{SET-MIN}$ and Twl$_{SET-MAX}$, i.e. minimum and maximum operating temperature limit values, respectively, for plant reasons, external climate and/or climate of the working area of the compressors of the refrigeration machines of the peripheral units 102, 103 involved.

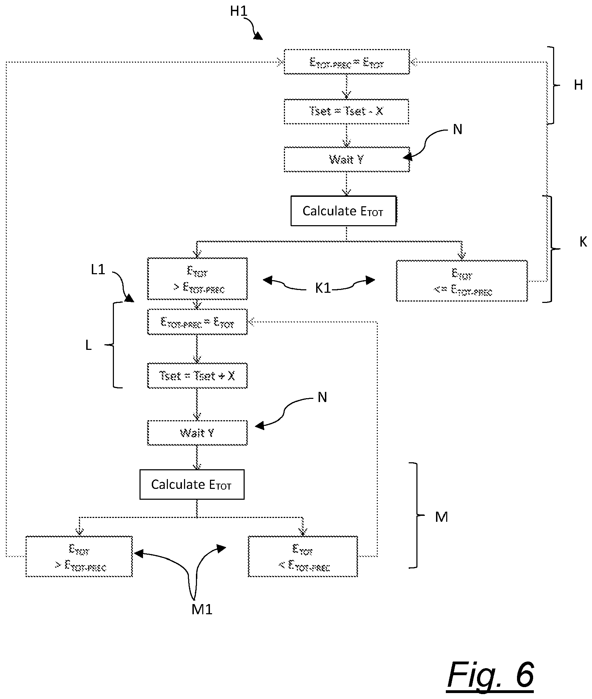

This optimisation process may comprise, in sequence, for example as seen in Figure 6:

- a step G that involves calculating the total energy consumption Etot and
- a step H that involves changing the target value Tset of the operating temperature by a first predefined value X, for example positive;
- a step K that involves re-calculating that total energy consumption Etot and checking whether the value of total energy consumption Etot has increased and, if so, carrying out the following step L, or repeating steps H and K;
- a step L that involves changing the target value Tset of the operating temperature by a second predefined value -X, opposite to the first predefined value X;
- a step M that is carried out if step L is carried out and that involves re-calculating the total energy consumption Etot, checking whether the value of the total energy consumption Etot has increased as a result of step L and, if so, carrying out step H or repeating step L.

This optimisation process may comprise a standby step N of a predefined time Y which is carried out following step H and/or step L.

In addition, step L and/or step B may provide a sub-step L1 and H1, respectively, for assigning the value of a second parameter Etot that is equal to the last value calculated of the total energy consumption Etot, to a first parameter Etot-prec. Steps K and/or M correspondingly may comprise a sub-step K1 and M1, respectively, which provide comparing the value of the first parameter Etot-prec with the value of the second parameter Etot as recalculated.

In general, the optimisation process according to this teaching may be implemented in a trial and error mode or in a predictive mode.

In the trial and error mode, starting from an initial target value of the operating temperature, modifications are applied to this initial value by repeating the calculation of a reference parameter, such as the coefficient of performance EER or the total energy consumption Etot as exemplified above, and further modifying this target value according to a logic aimed at optimising this reference parameter.

In the predictive mode, the initial value, or a set of values, of the target value may be adopted following a simulation in which the optimisation process is carried out in the trial and error mode by calculating the results of each trial, i.e. of each variation of the target value on the reference parameter, without actually making such a variation on the refrigeration plant 100.

In this predictive mode, the optimisation process may therefore be developed in the same way as in the trial and error mode where however, the initial value of the target value of the operating temperature is not assigned in advance but is in fact calculated by means of said simulation.

In a variant of this predictive mode, the target value may always be adopted following a simulation in which the optimisation process is carried out in the trial and error mode by calculating the results of each trial, i.e. of each variation of the target value on the reference parameter, without actually making such a variation on the refrigeration plant 100.

In a further variant of this predictive mode, before performing the aforementioned steps B and D or H and L, i.e. before actually changing the target value of the predefined value X or its opposite -X, they are carried out in a simulation mode before applying the actual change.

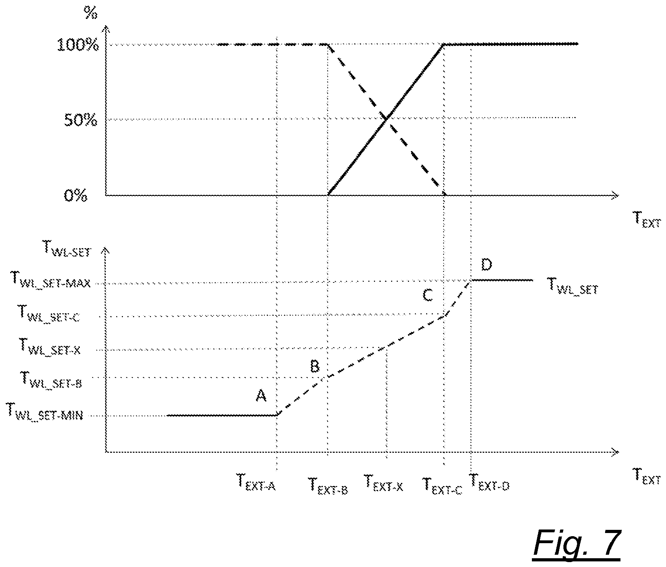

With particular reference to the diagrams in Figure 7, the control device 105 may be configured to define the reference range I=[Twl_set-min,Twl_set-max] for the operating temperature Twl and the target value Twl_set such that the latter varies according to a predefined function f(Text) of the ambient temperature Text, where Twl_set-min is a minimum limit value for the set point of the operating temperature Twl and Twl_set-max is a maximum limit value for the set point of the operating temperature Twl. Where, by way of non-limiting example in reference to the diagrams in Figure 7, the following is meant:

- Text-A the ambient temperature Text under the conditions represented by point A where this optimisation process may provide that for Text < Text-A, we have Twl = Twl_set-min;
- Text-D the ambient temperature Text under the conditions represented by point D, where this optimisation process may provide that for Text > Text-D, we have Twl = Twl_set-max;
- Text-B and Twl_set-B are a pair of temperatures defining point B which represents a temperature condition at which the activation or deactivation of the auxiliary refrigeration machine 104b takes place, which has a modulating cooling capacity in the event of increasing or decreasing ambient temperature Text, respectively;

- Text-C and Twl_set-C are a pair of temperatures defining point C which represents a temperature condition at which the deactivation or activation of the ventilation means 104c and the exclusion of the radiator member 104a from the cooling circuit 101, e.g. by operating the valve member 109, takes place, in the event of increasing or decreasing ambient temperature Text, respectively;
- Text-X and Twl_set-X are a pair of temperatures that define any other X points between A and D.

It is therefore understood how the optimisation process in question may provide that if the ambient temperature Text rises above a predefined value, which is lower than the value of the operating temperature Twl, the control device 105 activates the auxiliary refrigeration machine 104b to assist the cooling action of the secondary fluid implemented by the radiator member 104a in combination with the ventilation action of the ventilation means 104c.

In other words, in accordance with this optimisation process, it is possible to identify:

- a first operating zone, represented by ambient temperature values Text which are lower than a first reference temperature Text-B, in which the radiator member 104a alone with the possible ventilation effect of the ventilation means 104c are used to cool the secondary fluid in order to obtain a heat exchange with the environment which mainly occurs by radiation and convection or by forced convection;
- a second operating zone, represented by ambient temperature values Text from the first reference temperature Text-A to a second reference temperature Text-C, in which the radiator member 104a and the ventilation means 104c and the auxiliary refrigeration machine 104b are used to cool the secondary fluid;
- a third operating zone, represented by ambient temperature values Text which are greater than the second reference temperature Text-C, in which the auxiliary refrigeration machine 104b alone is used to cool the secondary fluid.

The upper part of Figure 7 illustrates a non-limiting example of the percentage contribution to the cooling thermal load respectively:

- by a hatched line, the radiator member 104a, possibly assisted by the ventilation means 104c;
- by a solid line, the one of the auxiliary refrigeration machine;

operated on the basis of this optimisation process.
The optimisation process may provide that when the ambient temperature Text reaches and falls below the minimum value Text-$_A$, then the minimum limit value Twl-set-$_{MIN}$ is assigned to the target value Twl-set.
Similarly, when the ambient temperature Text reaches and rises above the maximum value Text-$_D$, then the maximum limit value Twl-set-$_{MAX}$ is assigned to the target value Twl-set.
In accordance with this optimisation process, the following may be defined in the first and second operating zones, respectively, mentioned above:

- a fourth operating zone represented by ambient temperature values Text between a minimum value Text-A and the first reference temperature Text-B, where the target value Twl-set is greater than the minimum limit value Twl-set-$_{MIN}$ and
- a fourth operating zone represented by ambient temperature values Text between the second reference temperature Text-C maximum value Text-D and one, where the target value Twl-set is less than the maximum limit value Twl-set-$_{MAX}$. Ambient temperature Text means the temperature of the environment with which the auxiliary refrigeration machine exchanges heat.

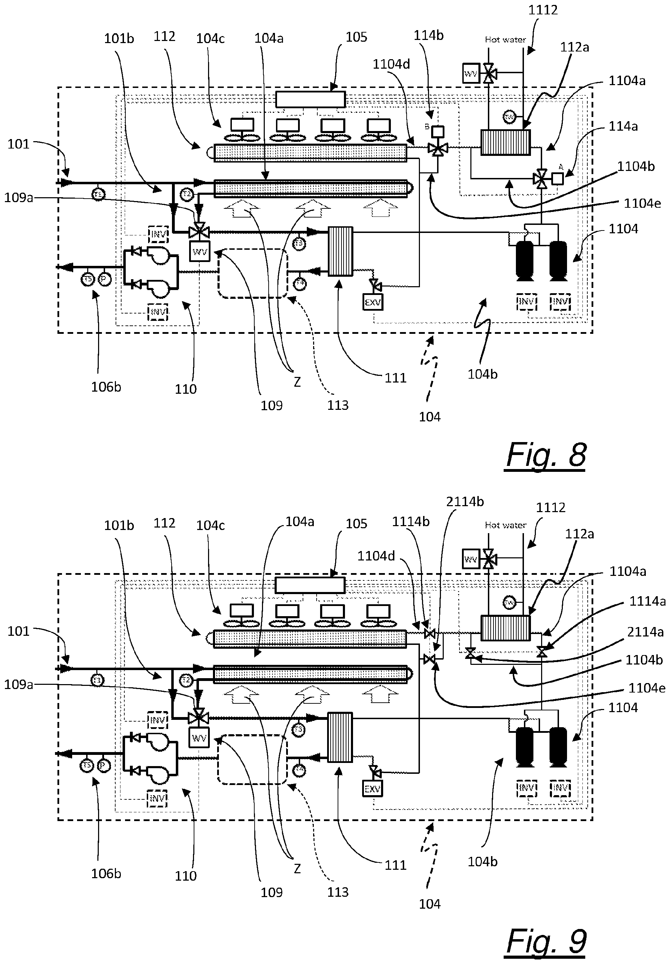

As can be seen for example in Figure 7, the predefined function f(Text) may follow a hatched line that varies between Text-$_{MIN}$ and Text-$_{MAX}$ and takes on such values when the operating temperature falls below the minimum limit value Text-$_{MIN}$ or rises above the maximum limit value Text-$_{MAX}$.
Or the function f(Text) may be defined by a straight segment or by applying optimisation processes of the coefficient of performance EER or the energy consumption, such as those described above.
With particular reference to Figures 8-10, therein are represented variants of the refrigeration plant according to this teaching, wherein the cooling of the fluid carried out by the cooling apparatus 104 provides for the recovery of the heat removed from the secondary fluid in order to heat a fluid t, which may for example be domestic water or water from a heating plant.
In particular, a regenerative exchanger 112a configured to exchange heat between the secondary fluid and the tertiary fluid, recirculating in a tertiary circuit 1112, may be placed hydraulically coupled to the condenser member in order to recover and not dissipate heat via the condenser member 112.
The regenerative exchanger 112a in particular may be coupled to the condenser member 112 in an in parallel and/or series configuration, or may be coupled thereto by means of connecting piping and valves, for example as more fully exemplified below, so that the regenerative exchanger 112a and the condenser member 112 may be alternatively or simultaneously supplied in a configuration which may be selected between an in parallel configuration and a series configuration.
The regenerative exchanger 112a may be integrated in the auxiliary refrigeration machine 104b.

An auxiliary valve unit 114 of the auxiliary refrigeration machine 104b may be configured to implement an in parallel or series hydraulic connection of the condenser member 112 with the regenerative exchanger 112a in such a way that the secondary fluid may be supplied to the condenser member 112 alone or to the regenerative exchanger 112a alone, or to both, possibly in a partial manner. The control device 105 may be connected to the auxiliary valve unit 114 to operate it and may be configured or programmed to optimise heat recovery to the tertiary fluid, i.e., to favour the supply of the secondary fluid to the regenerative exchanger 112a by directing the secondary fluid to the condenser member 112 only when heat dissipation from the secondary fluid in the regenerative exchanger 112a is insufficient or does not allow optimised operation of the refrigeration plant 10.

Otherwise, the control device 105 may be connected to the auxiliary valve unit in order to operate it so as to provide on demand a thermal load to the tertiary fluid by means of the regenerative exchanger 112a, thus instead favouring the supply of the secondary fluid to the condenser member 112 under normal operating conditions.

Depending on the contingent requirements for implementing this teaching, the auxiliary valve unit may comprise, as for example visible in Figure 8, two three-way valves 114a and 114b, of which a first three-way valve 114a intercepts a hydraulic supply branch 1104a connecting a compressor unit 1104 of the auxiliary refrigeration machine 104b to the regenerative exchanger 112a, wherein the first three-way valve 114a is also connected to a first bypass branch 1104b bypassing the regenerative exchanger 112a to put the delivery of the compressor unit 1104 directly in hydraulic connection with a connection branch 1104c connecting the discharge of the regenerative exchanger 112a to the second three-way valve 114b, the two discharge paths of which being hydraulically connected with the inlet 1104d of the condenser member 112 and with a second bypass branch 1104e bypassing the condenser member 112, respectively.

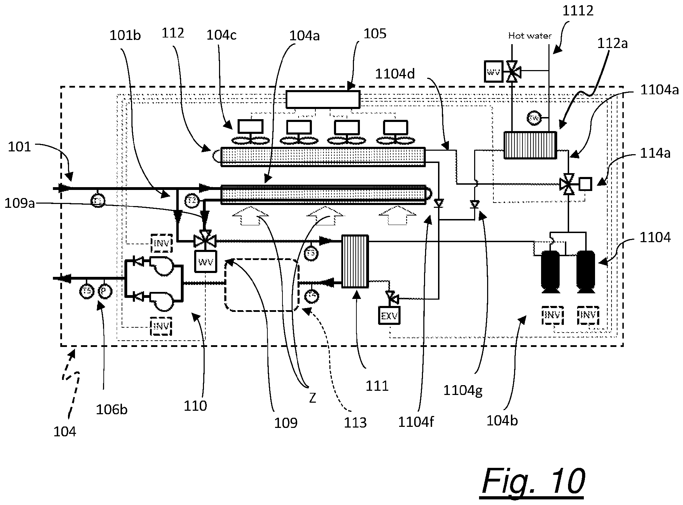

Figures 9 and 10 show by way of non-limiting example, two possible variants in which, respectively:

- the first three-way valve 114a is replaced by two two-way valves 1114a and 2114a intercepting the hydraulic supply branch 1104a and the first bypass branch 1104b, respectively, and also the second three-way valve 114b is replaced by two two-way valves 1114b and 2114b intercepting the connection branch 1104c and the second bypass branch 1104b, respectively;
- the first bypass branch 1104b and the second bypass branch 1104e are absent and the first three-way valve 114a intercepts a hydraulic supply branch 1104a and is connected with the inlet 1104d of the condenser member 112; and where two non-return valves 1104f and 1104g intercept the outlet of the condenser member 112 and the regenerative exchanger 112a, respectively.

In the exemplified variant shown in Figure 10, the operation of the first three-way valve 114a determines whether the auxiliary refrigeration machine 104b dissipates heat by means of the condenser unit 112 or by means of the regenerative exchanger 112a or by both, partializing the flow of refrigerant supplied to the latter. The two non-return valves ensure there is no unwanted flow back to the condenser unit 112 and/or the regenerative exchanger 112a.

In normal operation, the auxiliary valve unit diverts the flow by bypassing the regenerative exchanger 112a to direct the flow to the condenser member 112.

If for example, the tertiary circuit 1112 is required to obtain hot water at a temperature of for example, 50°C, the auxiliary valve unit may be operated so that the flow of refrigerant from the auxiliary refrigeration machine 104b supplies the regenerative exchanger 112a and the condenser member 112 is bypassed. Depending on the thermal load from the peripheral units 102, 103, the auxiliary refrigeration machine 104b dissipates heat by means of the condenser unit 112, the regenerative exchanger 112a or by both in a partialized manner. It has thus been ascertained how this teaching achieves the intended task and aims.

In fact, it should be noted that in a conventional plant, if the refrigerant fluid used in the refrigeration machines of the peripheral units were carbon dioxide, $CO_2$, if the temperature of the cooling water, i.e. of the secondary fluid, exceeds about 25°C, the operation of the refrigeration machines of the peripheral units would switch to a transcritical cycle with progressively worse and even impracticable energy efficiencies for the low temperature units, both due to the pressures and the temperatures reached at the discharge of the compressors.

Conversely, in a refrigeration plant according to this teaching, the cooling water may be maintained permanently below that threshold or even colder, thus ensuring that the peripheral units can work constantly in a subcritical operation with a lower compression ratio and with much better and safer results.

In this way, by controlling the water temperature throughout the year, it is possible to limit the saturated delivery temperature of the compressors of the peripheral units and thus the compression ratio of the machines integrated in them.

This teaching thus conceived is susceptible to numerous modifications and variations, all of which fall within the scope of protection of the attached claims. In addition, all details may be replaced by other technically equivalent elements. In practice, the forms and dimensions can be varied according to the contingent requirements and the prior art.

Where the constructional and technical features mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

**Claims**

1. A refrigeration plant (100) with a cooling circuit (101), comprising:

   - at least one peripheral unit (102, 103) having a refrigeration machine apt to refrigerate a storage compartment; said refrigeration machine having a heat exchanger (102a, 103a) connected to said cooling circuit (101) for dissipating heat to a secondary fluid flowing therein;
   - a cooling apparatus (104) connected to said cooling circuit (101) for cooling said secondary fluid;
   - a control device (105) connected to said cooling apparatus (104) and configured to operate the latter so as to maintain at least an operating temperature of said secondary fluid within at least a corresponding reference range and/or to equalize it to at least a corresponding target value;

   wherein said cooling apparatus (104) comprises:

   - a radiator member (104a) connected to said cooling circuit (101) and crossable by said secondary fluid to dissipate the heat thereof;
   - an auxiliary refrigeration machine (104b) comprising an evaporator member (111) connected to said cooling circuit (101) for absorbing heat from said secondary fluid, and a condenser member (112) for dissipating heat to the environment;
   - ventilation means (104c) for generating an airflow for cooling said radiator member (104a) and said condenser member (112);

   wherein preferably the radiator member (104a) is located upstream of the condenser member (112);

   said control device (105) being configured to actuate said ventilation means (104c) and/or said auxiliary refrigeration machine (104b) in order to regulate said operating temperature of said secondary fluid.

2. The refrigeration plant (100) according to claim 1, comprising at least one temperature sensor (106a, 106b) connected to said cooling circuit (101) so as to detect said operating temperature; wherein said control device (105) is connected to said temperature sensor (106a, 106b) and is configured to operate said cooling apparatus (104) so as to maintain said operating temperature, which is detected by said temperature sensor (106a, 106b), within said reference range or to equalize it to at least a corresponding target value.

3. The refrigeration plant (100) according to one of the preceding claims, wherein said at least one operating temperature comprises a first exchange temperature at which said secondary fluid exchanges heat with said heat exchanger (102a, 103a).

4. The refrigeration plant (100) according to the preceding claim, wherein said at least one peripheral unit (102, 103) comprises a low temperature unit having a refrigeration machine configured to operate with carbon dioxide as a refrigerant fluid and at an evaporation temperature which is not greater than -18°C; wherein said reference range has a maximum limit equal to 22°C or said target value is not greater than 22°C with reference to said operating temperature of said secondary fluid at the inlet of said heat exchanger.

5. The refrigeration plant (100) according to the preceding claim, comprising, for each of said peripheral units (102, 103) or for each group of said peripheral units (102, 103):

   - a branch (107) of said cooling circuit (101) connected to said heat exchanger (102a, 103a);
   - a local valve unit (108) connected to said branch (107) and operable to regulate a branch flow rate of said secondary fluid flowing in said branch (107) to exchange heat with the heat exchanger (102a, 103a) of said peripheral unit (102, 103) or of said unit.

6. The refrigeration plant (100) according to one of the preceding claims, wherein said operating temperature comprises a second exchange temperature consisting of a temperature at which said secondary fluid exchanges heat with said cooling apparatus (104) or a temperature of said secondary fluid detected in said cooling circuit (101) directly upstream or directly downstream of said cooling apparatus (104).

7. The refrigeration plant (100) according to the preceding claim, comprising, connected to said cooling circuit (101), a general valve unit (109) and/or a pumping member (110) having an adjustable flow rate, each operable to modulate a flow of said secondary fluid interacting with said cooling apparatus (104).

**8.** The refrigeration plant (100) according to one of the preceding claims, wherein said condenser member (112) and said radiator member (104a) are arranged in series so as to be crossed in sequence by an airflow generated by said ventilation means (104c).

**9.** The refrigeration plant (100) according to one of the preceding claims, wherein said control device (105) is configured to implement an optimisation process that is selectively configured to:

- maximise a coefficient of performance $EER_{TOT}$ of said refrigeration plant,

wherein said coefficient of performance $EER_{TOT}$ is given by the formula:

$$EER_{TOT} = \frac{EER_{SP} * EER_{CH}}{EER_{SP} + EER_{CH} + 1}$$

wherein $EER_{SP}$ consists of the average of the energy efficiencies of each of said one peripheral unit (102, 103); $EER_{CH}$ consists of the energy efficiency of said cooling apparatus (104);

- minimize a total energy consumption Etot of said refrigeration plant (100), wherein said total energy consumption Etot is given by the formula $E_{TOT} = E_{SP} + E_{CH} + E_{PC} + E_{FAN}$ wherein $E_{SP}$ consists of the energy consumption of the peripheral units 102, 103, $E_{PC}$ consists of the energy consumption of the pumping unit 110, $E_{CH}$ consists of the energy consumption of the radiator member 104a and of the auxiliary refrigeration machine 104b and $E_{FAN}$ consists of the energy consumption of the ventilation means 104c;
- define a reference range I= [Twl_set-min, Twl_set-max] for said operating temperature Twl and a target value Twl_set which varies according to a predefined function f(Text) of the ambient temperature Text.

**10.** The refrigeration plant (100) according to the preceding claim, wherein said optimisation process comprises:

- a step A that involves calculating the coefficient of performance EERtot;
- a step B that involves modifying said target value Tset of said operating temperature, by a first predefined value X;
- a step C that involves re-calculating said coefficient of performance EERtot and checking whether the value of the coefficient of performance EERtot has decreased and, if so, carrying out the following step D, or repeating said steps B and C;
- a step D that involves modifying said target value Tset of said operating temperature by a second predefined value -X, opposite to said first predefined value X;
- a step E that is carried out if step D is carried out and that involves re-calculating the coefficient of performance EERtot, checking whether the value of the coefficient of performance EERtot has decreased as a result of step D and, if so, carrying out said step B or repeating said step D.

**11.** The refrigeration plant (100) according to claim 9, wherein said optimisation process comprises:

- a step G that involves calculating the total energy consumption Etot of said refrigeration plant (100);
- a step H that involves changing the target value Tset of the operating temperature by a first predefined value X;
- a step K that involves re-calculating said total energy consumption Etot and checking whether the value of total energy consumption Etot has increased and, if so, carrying out the following step L or repeating the steps H and K;
- a step L that involves changing said target value Tset of the operating temperature by a second predefined value -X, opposite to the first predefined value X;
- a step M that is carried out if step L is carried out and that involves re-calculating the total energy consumption Etot, checking whether the value of the total energy consumption Etot has increased as a result of step L and, if so, carrying out step H or repeating step L.

**12.** The refrigeration plant (100) according to claim 9, wherein said control device (105) is configured to operate said auxiliary refrigeration machine (104b) alone, said radiator member (104a) alone with said ventilation means (104c), or said auxiliary refrigeration machine (104b) at the same time as said radiator member (104a) and said ventilation means (104c), depending on the value of said ambient temperature (Text), of said operating temperature (Twl) and/or of a difference between said ambient temperature (Text) and said operating temperature (Twl).

**13.** The refrigeration plant (100) according to one of the preceding claims, wherein said auxiliary refrigeration machine (104b) comprises a regenerative exchanger (112a) hydraulically coupled to said condenser member (112) and configured to exchange heat between said secondary fluid and a tertiary fluid recirculating in a tertiary circuit (1112) to recover heat to be dissipated by said auxiliary refrigeration machine (104b) by heating said tertiary fluid; wherein said regenerative exchanger (112a) and said condenser member (112) are coupled according to an in parallel and/or series configuration, or they are coupled in such a way that they can be alternatively or simultaneously supplied in a configuration selectable between an in parallel configuration and a series configuration.

**Patentansprüche**

1. Kühlungsanlage (100) mit einem Kühlkreislauf (101), umfassend:

   - mindestens eine Peripherieeinheit (102, 103), die eine Kühlungsmaschine aufweist, die zum Kühlen eines Lagerfachs geeignet ist; wobei die Kühlungsmaschine einen Wärmetauscher (102a, 103a) aufweist, der mit dem Kühlkreislauf (101) verbunden ist, zum Ableiten von Wärme an ein Sekundärfluid, das darin fließt;
   - eine Kühleinrichtung (104), die mit dem Kühlkreislauf (101) verbunden ist, zum Kühlen des Sekundärfluids;
   - eine Steuervorrichtung (105), die mit der Kühleinrichtung (104) verbunden und konfiguriert ist, um die Letztere zu betreiben, um mindestens eine Betriebstemperatur des Sekundärfluids innerhalb mindestens eines entsprechenden Referenzbereichs zu halten und/oder sie auf mindestens einen entsprechenden Zielwert anzugleichen;
   wobei die Kühleinrichtung (104) umfasst:

      - ein Kühlerelement (104a), das mit dem Kühlkreislauf (101) verbunden ist und durch das Sekundärfluid durchströmt werden kann, um die Wärme davon abzuleiten;
      - eine Hilfskühlungsmaschine (104b), umfassend ein Verdampferelement (111), das mit dem Kühlkreislauf (101) verbunden ist, zum Aufnehmen von Wärme aus dem Sekundärfluid, und ein Kondensatorelement (112) zum Ableiten von Wärme an die Umgebung;
      - Belüftungsmittel (104c) zum Erzeugen eines Luftflusses zum Kühlen des Kühlerelements (104a) und des Kondensatorelements (112);

   wobei sich vorzugsweise das Kühlerelement (104a) stromaufwärts des Kondensatorelements (112) befindet;
   wobei die Steuervorrichtung (105) konfiguriert ist, um die Belüftungsmittel (104c) und/oder die Hilfskühlungsmaschine (104b) zu betätigen, um die Betriebstemperatur des Sekundärfluids zu regulieren.

2. Kühlungsanlage (100) nach Anspruch 1, umfassend mindestens einen Temperatursensor (106a, 106b), der mit dem Kühlkreislauf (101) verbunden ist, um die Betriebstemperatur zu erfassen; wobei die Steuervorrichtung (105) mit dem Temperatursensor (106a, 106b) verbunden und konfiguriert ist, um die Kühleinrichtung (104) zu betreiben, um die Betriebstemperatur, die durch den Temperatursensor (106a, 106b) erfasst wird, innerhalb des Referenzbereichs zu halten oder sie mindestens auf einen entsprechenden Zielwert anzugleichen.

3. Kühlungsanlage (100) nach einem der vorstehenden Ansprüche, wobei die mindestens eine Betriebstemperatur eine erste Austauschtemperatur umfasst, bei der das Sekundärfluid Wärme mit dem Wärmetauscher (102a, 103a) austauscht.

4. Kühlungsanlage (100) nach dem vorstehenden Anspruch, wobei die mindestens eine Peripherieeinheit (102, 103) eine Niedertemperatureinheit umfasst, die eine Kühlungsmaschine aufweist, die konfiguriert ist, um mit Kohlendioxid als ein Kühlungsmittel und bei einer Verdampfungstemperatur von nicht mehr als -18 °C betrieben zu werden; wobei der Referenzbereich eine maximale Grenze gleich 22 °C aufweist oder der Zielwert in Bezug auf die Betriebstemperatur des Sekundärfluids an dem Einlass des Wärmetauschers nicht größer als 22 °C ist.

5. Kühlungsanlage (100) nach dem vorstehenden Anspruch, umfassend für jede der Peripherieeinheiten (102, 103) oder für jede Gruppe der Peripherieeinheiten (102, 103):

      - einen Zweig (107) des Kühlkreislaufs (101), der mit dem Wärmetauscher (102a, 103a) verbunden ist;
      - eine lokale Ventileinheit (108), die mit dem Zweig (107) verbunden ist und betreibbar ist, um eine Zweigdurchflussrate des Sekundärfluids zu regulieren, das in dem Zweig (107) fließt, um Wärme mit dem Wärmetauscher (102a, 103a) der Peripherieeinheit (102, 103) oder der Einheit auszutauschen.

6. Kühlungsanlage (100) nach einem der vorstehenden Ansprüche, wobei die Betriebstemperatur eine zweite Austauschtemperatur umfasst, die aus einer Temperatur besteht, bei der das Sekundärfluid Wärme mit der Kühleinrichtung (104) austauscht, oder einer Temperatur des Sekundärfluids, die in dem Kühlkreislauf (101) unmittelbar stromaufwärts oder unmittelbar stromabwärts der Kühleinrichtung (104) erfasst wird.

**7.** Kühlungsanlage (100) nach dem vorstehenden Anspruch, umfassend, verbunden mit dem Kühlkreislauf (101), eine allgemeine Ventileinheit (109) und/oder ein Pumpelement (110), die eine einstellbare Durchflussrate aufweisen, die jeweils betreibbar sind, um einen Durchfluss des Sekundärfluids zu modulieren, das mit der Kühleinrichtung (104) interagiert.

**8.** Kühlungsanlage (100) nach einem der vorstehenden Ansprüche, wobei das Kondensatorelement (112) und das Kühlerelement (104a) in Reihe angeordnet sind, um nacheinander durch einen Luftfluss durchströmt zu werden, der durch die Belüftungseinrichtung (104c) erzeugt wird.

**9.** Kühlungsanlage (100) nach einem der vorstehenden Ansprüche, wobei die Steuervorrichtung (105) konfiguriert ist, um einen Optimierungsprozess zu implementieren, der selektiv konfiguriert ist zum:

- Maximieren eines Leistungskoeffizienten $EER_{TOT}$ der Kühlungsanlage, wobei der Leistungskoeffizient $EER_{TOT}$ durch die folgende Formel gegeben ist:

$$EER_{TOT} = \frac{EER_{SP} * EER_{CH}}{EER_{SP} + EER_{CH} + 1}$$

wobei $EER_{SP}$ aus dem Durchschnitt der Energieeffizienzen jeder der einen Peripherieeinheiten (102, 103) besteht; $EER_{CH}$ aus der Energieeffizienz der Kühleinrichtung (104) besteht;
- Minimieren eines Gesamtenergieverbrauchs Etot der Kühlungsanlage (100), wobei der Gesamtenergieverbrauch Etot durch die Formel $E_{TOT} = E_{SP} + E_{CH} + E_{PC} + E_{FAN}$ gegeben ist, wobei $E_{SP}$ aus dem Energieverbrauch der Peripherieeinheiten 102, 103 besteht, $E_{PC}$ aus dem Energieverbrauch der Pumpeinheit 110 besteht, $E_{CH}$ aus dem Energieverbrauch des Kühlerelements 104a und der Hilfskühlungsmaschine 104b besteht und $E_{FAN}$ aus dem Energieverbrauch der Belüftungseinrichtung 104c besteht;
- Definieren eines Referenzbereichs I= [Twl_set-min, Twl_set-max] für die Betriebstemperatur Twl und eines Zielwerts Twl_set, der gemäß einer vordefinierten Funktion f(Text) der Umgebungstemperatur Text variiert.

**10.** Kühlungsanlage (100) nach dem vorstehenden Anspruch, wobei der Optimierungsprozess umfasst:

- einen Schritt A, der das Berechnen des Leistungskoeffizienten EERtot einschließt;
- einen Schritt B, der das Modifizieren des Zielwerts Tset der Betriebstemperatur um einen ersten vordefinierten Wert X einschließt;
- einen Schritt C, der ein Neuberechnen des Leistungskoeffizienten EERtot und ein Überprüfen, ob der Wert des Leistungskoeffizienten EERtot gesunken ist, und, falls dies der Fall ist, ein Ausführen des folgenden Schritts D oder ein Wiederholen der Schritte B und C einschließt;
- einen Schritt D, der das Modifizieren des Zielwerts Tset der Betriebstemperatur um einen zweiten vordefinierten Wert -X einschließt, der dem ersten vordefinierten Wert X entgegengesetzt ist;
- einen Schritt E, der ausgeführt wird, falls Schritt D ausgeführt wird, und der das Neuberechnen des Leistungskoeffizienten EERtot, das Überprüfen, ob sich der Wert des Leistungskoeffizienten EERtot infolge von Schritt D verringert hat, und, falls dies der Fall ist, das Ausführen von Schritt B oder das Wiederholen von Schritt D einschließt.

**11.** Kühlungsanlage (100) nach Anspruch 9, wobei der Optimierungsprozess umfasst:

- einen Schritt G, der das Berechnen des Gesamtenergieverbrauchs Etot der Kühlungsanlage (100) einschließt;
- einen Schritt H, der das Ändern des Zielwerts Tset der Betriebstemperatur um einen ersten vordefinierten Wert X einschließt;
- einen Schritt K, der das Neuberechnen des Gesamtenergieverbrauchs Etot und das Überprüfen, ob sich der Wert des Gesamtenergieverbrauchs Etot erhöht hat, und, falls dies der Fall ist, das Ausführen des folgenden Schritts L oder das Wiederholen der Schritte H und K einschließt;
- einen Schritt L, der das Ändern des Zielwerts Tset der Betriebstemperatur um einen zweiten vordefinierten Wert -X einschließt, der dem ersten vordefinierten Wert X entgegengesetzt ist;
- einen Schritt M, der ausgeführt wird, falls Schritt L ausgeführt wird, und der das Neuberechnen des Gesamtenergieverbrauchs Etot, das Überprüfen, ob sich der Wert des Gesamtenergieverbrauchs Etot infolge von Schritt L erhöht hat, und, falls dies der Fall ist, das Ausführen von Schritt H oder das Wiederholen von Schritt L einschließt.

**12.** Kühlungsanlage (100) nach Anspruch 9, wobei die Steuervorrichtung (105) konfiguriert ist, um die Hilfskühlungsmaschine (104b) allein, das Kühlerelement (104a) allein mit dem Belüftungsmittel (104c) oder die Hilfskühlungsmaschine (104b) gleichzeitig mit dem Kühlerelement (104a) und dem Belüftungsmittel (104c) zu betreiben, abhängig von dem Wert der Umgebungstemperatur (Text), der Betriebstemperatur (Twl) und/oder einer Differenz zwischen der Umgebungstemperatur (Text) und der Betriebstemperatur (Twl).

13. Kühlungsanlage (100) nach einem der vorstehenden Ansprüche, wobei die Hilfskühlungsmaschine (104b) einen regenerativen Tauscher (112a) umfasst, der mit dem Kondensatorelement (112) hydraulisch gekoppelt ist, und konfiguriert ist, um Wärme zwischen dem Sekundärfluid und einem Tertiärfluid auszutauschen, das in einem Tertiärkreislauf (1112) zirkuliert, um Wärme rückzugewinnen, die durch die Hilfskühlungsmaschine (104b) durch das Erwärmen des Tertiärfluids abgeleitet werden soll; wobei der regenerative Tauscher (112a) und das Kondensatorelement (112) gemäß einer Parallel- oder Reihenkonfiguration gekoppelt sind oder auf solche Weise gekoppelt sind, dass sie abwechselnd oder gleichzeitig in einer Konfiguration bereitgestellt werden können, die zwischen einer Parallelkonfiguration und einer Reihenkonfiguration wählbar ist.

**Revendications**

1. Installation de réfrigération (100) avec un circuit de refroidissement (101), comprenant :

   - au moins une unité périphérique (102, 103) ayant une machine de réfrigération apte à réfrigérer un compartiment de stockage ; ladite machine de réfrigération ayant un échangeur de chaleur (102a, 103a) relié audit circuit de refroidissement (101) pour dissiper la chaleur dans un fluide secondaire qui y circule ;
   - un appareil de refroidissement (104) relié audit circuit de refroidissement (101) pour refroidir ledit fluide secondaire ;
   - un dispositif de commande (105) connecté audit appareil de refroidissement (104) et configuré pour faire fonctionner ce dernier de manière à maintenir au moins une température de fonctionnement dudit fluide secondaire dans au moins une plage de référence correspondante et/ou à l'égaliser à au moins une valeur cible correspondante ;
   dans laquelle ledit appareil de refroidissement (104) comprend :

   - un élément radiateur (104a) relié audit circuit de refroidissement (101) et pouvant être traversé par ledit fluide secondaire pour dissiper la chaleur de celui-ci ;
   - une machine de réfrigération auxiliaire (104b) comprenant un élément évaporateur (111) relié audit circuit de refroidissement (101) pour absorber la chaleur dudit fluide secondaire, et un élément condenseur (112) pour dissiper la chaleur dans l'environnement ;
   - des moyens de ventilation (104c) permettant de générer un flux d'air pour refroidir ledit élément radiateur (104a) et ledit élément condenseur (112) ;

   dans laquelle, de préférence, l'élément radiateur (104a) est situé en amont de l'élément condenseur (112) ; ledit dispositif de commande (105) étant configuré pour actionner lesdits moyens de ventilation (104c) et/ou ladite machine de réfrigération auxiliaire (104b) afin de réguler ladite température de fonctionnement dudit fluide secondaire.

2. Installation de réfrigération (100) selon la revendication 1, comprenant au moins un capteur de température (106a, 106b) connecté audit circuit de refroidissement (101) de manière à détecter ladite température de fonctionnement ; dans laquelle ledit dispositif de commande (105) est connecté audit capteur de température (106a, 106b) et est configuré pour faire fonctionner ledit appareil de refroidissement (104) de manière à maintenir ladite température de fonctionnement, qui est détectée par ledit capteur de température (106a, 106b), dans ladite plage de référence ou à l'égaliser à au moins une valeur cible correspondante.

3. Installation de réfrigération (100) selon l'une des revendications précédentes, dans laquelle ladite au moins une température de fonctionnement comprend une première température d'échange à laquelle ledit fluide secondaire échange de la chaleur avec ledit échangeur de chaleur (102a, 103a).

4. Installation de réfrigération (100) selon la revendication précédente, dans laquelle ladite au moins une unité périphérique (102, 103) comprend une unité à basse température ayant une machine de réfrigération configurée pour fonctionner avec du dioxyde de carbone en tant que fluide frigorigène et à une température d'évaporation qui n'est pas supérieure à -18 °C ; dans laquelle ladite plage de référence a une limite maximale égale à 22 °C ou ladite valeur cible n'est pas supérieure à 22 °C par rapport à ladite température de fonctionnement dudit fluide secondaire à l'entrée dudit échangeur de chaleur.

5. Installation de réfrigération (100) selon la revendication précédente, comprenant, pour chacune desdites unités périphériques (102, 103) ou pour chaque groupe desdites unités périphériques (102, 103) :

   - une dérivation (107) dudit circuit de refroidissement (101) reliée audit échangeur de chaleur (102a, 103a) ;

- une unité de vanne locale (108) reliée à ladite dérivation (107) et opérationnelle pour réguler un débit de dérivation dudit fluide secondaire circulant dans ladite dérivation (107) pour échanger de la chaleur avec l'échangeur de chaleur (102a, 103a) de ladite unité périphérique (102, 103) ou de ladite unité.

6. Installation de réfrigération (100) selon l'une des revendications précédentes, dans laquelle ladite température de fonctionnement comprend une seconde température d'échange constituée d'une température à laquelle ledit fluide secondaire échange de la chaleur avec ledit appareil de refroidissement (104) ou d'une température dudit fluide secondaire détectée dans ledit circuit de refroidissement (101) directement en amont ou directement en aval dudit appareil de refroidissement (104).

7. Installation de réfrigération (100) selon la revendication précédente, comprenant, reliée audit circuit de refroidissement (101), une unité de vanne générale (109) et/ou un élément de pompage (110) ayant un débit réglable, chacun étant opérationnel pour moduler un débit dudit fluide secondaire interagissant avec ledit appareil de refroidissement (104).

8. Installation de réfrigération (100) selon l'une des revendications précédentes, dans laquelle ledit élément condenseur (112) et ledit élément radiateur (104a) sont disposés en série de manière à être traversés en séquence par un flux d'air généré par lesdits moyens de ventilation (104c).

9. Installation de réfrigération (100) selon l'une des revendications précédentes, dans laquelle ledit dispositif de commande (105) est configuré pour mettre en oeuvre un processus d'optimisation qui est sélectivement configuré pour :

- maximiser un coefficient de performance $EER_{TOT}$ de ladite installation de réfrigération, dans laquelle ledit coefficient de performance $EER_{TOT}$ est donné par la formule :

$$EER_{TOT} = \frac{EER_{SP} * EER_{CH}}{EER_{SP} + EER_{CH} + 1}$$

dans laquelle $EER_{SP}$ correspond à la moyenne des efficacités énergétiques de chacune des unités périphériques (102, 103) ; $EER_{CH}$ correspond à l'efficacité énergétique dudit appareil de refroidissement (104) ;
- minimiser une consommation totale d'énergie Etot de ladite installation de réfrigération (100), dans laquelle ladite consommation totale d'énergie Etot est donnée par la formule $E_{TOT}$

= $E_{SP} + E_{CH} + E_{PC} + E_{FAN}$, dans laquelle $E_{SP}$ correspond à la consommation d'énergie des unités périphériques 102, 103, $E_{PC}$ correspond à la consommation d'énergie de l'unité de pompage 110, $E_{CH}$ correspond à la consommation d'énergie de l'élément radiateur 104a et de la machine de réfrigération auxiliaire 104b et $E_{FAN}$ correspond à la consommation d'énergie des moyens de ventilation 104c ;
- définir une plage de référence I = [Twl_set-min, Twl_set-max] pour ladite température de fonctionnement Twl et une valeur cible Twl_set qui varie selon une fonction prédéfinie f(Text) de la température ambiante Text.

10. Installation de réfrigération (100) selon la revendication précédente, dans laquelle ledit processus d'optimisation comprend :

- une étape A qui consiste à calculer le coefficient de performance EERtot ;
- une étape B qui consiste à modifier ladite valeur cible Tset de ladite température de fonctionnement, par une première valeur prédéfinie X ;
- une étape C qui consiste à recalculer ledit coefficient de performance EERtot et à vérifier si la valeur du coefficient de performance EERtot a diminué et, dans l'affirmative, à exécuter l'étape D suivante, ou à répéter lesdites étapes B et C ;
- une étape D qui consiste à modifier ladite valeur cible Tset de ladite température de fonctionnement par une seconde valeur prédéfinie -X, opposée à ladite première valeur prédéfinie X ;
- une étape E qui est exécutée si l'étape D est exécutée et qui consiste à recalculer le coefficient de performance EERtot, à vérifier si la valeur du coefficient de performance EERtot a diminué à la suite de l'étape D et, dans l'affirmative, à exécuter ladite étape B ou à répéter ladite étape D.

11. Installation de réfrigération (100) selon la revendication 9, dans laquelle ledit processus d'optimisation comprend :

- une étape G qui consiste à calculer la consommation totale d'énergie Etot de ladite installation de réfrigération (100) ;
- une étape H qui consiste à modifier la valeur cible Tset de la température de fonctionnement par une première valeur prédéfinie X ;
- une étape K qui consiste à recalculer ladite consommation totale d'énergie Etot et à vérifier si la valeur de la consommation totale d'énergie Etot a augmenté et, dans l'affirmative, à exécuter l'étape L suivante ou à répéter les étapes H et K ;
- une étape L qui consiste à modifier ladite valeur cible Tset de la température de fonctionnement par une seconde valeur prédéfinie -X, opposée à la première valeur prédéfinie X ;
- une étape M qui est exécutée si l'étape L est exécutée et qui consiste à recalculer la consommation totale d'énergie Etot, à vérifier si la valeur de la consommation totale d'énergie Etot a augmenté à la suite de l'étape L et, dans l'affirmative, à exécuter l'étape H ou à répéter l'étape L.

12. Installation de réfrigération (100) selon la revendication 9, dans laquelle ledit dispositif de commande (105) est configuré pour faire fonctionner ladite machine de réfrigération auxiliaire (104b) seule, ledit élément radiateur (104a) seul avec lesdits moyens de ventilation (104c), ou ladite machine de réfrigération auxiliaire (104b) en même temps que ledit élément radiateur (104a) et lesdits moyens de ventilation (104c), en fonction de la valeur de ladite température ambiante (Text), de ladite température de fonctionnement (Twl) et/ou d'une différence entre ladite température ambiante (Text) et ladite température de fonctionnement (Twl).

13. Installation de réfrigération (100) selon l'une des revendications précédentes, dans laquelle ladite machine de réfrigération auxiliaire (104b) comprend un échangeur régénératif (112a) couplé hydrauliquement audit élément condenseur (112) et configuré pour échanger de la chaleur entre ledit fluide secondaire et un fluide tertiaire recirculant dans un circuit tertiaire (1112) pour récupérer de la chaleur à dissiper par ladite machine de réfrigération auxiliaire (104b) en chauffant ledit fluide tertiaire ; dans laquelle ledit échangeur régénératif (112a) et ledit élément condenseur (112) sont couplés selon une configuration en parallèle et/ou en série, ou sont couplés de manière à pouvoir être alimentés alternativement ou simultanément dans une configuration pouvant être choisie entre une configuration en parallèle et une configuration en série.

_Fig. 1_

_Fig. 2_

*Fig. 3*

*Fig. 4*

*Fig. 5*

*Fig. 6*

*Fig. 7*

*Fig. 8*

*Fig. 9*

*Fig. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3260800 A1